(19) Europäisches Patentamt / European Patent Office / Office européen des brevets

(11) **EP 1 343 021 B1**

(12) **EUROPÄISCHE PATENTSCHRIFT**

(45) Veröffentlichungstag und Bekanntmachung des Hinweises auf die Patenterteilung:
**24.09.2008  Patentblatt 2008/39**

(51) Int Cl.:
*G01S 13/90* *(2006.01)*

(21) Anmeldenummer: **03003517.4**

(22) Anmeldetag: **15.02.2003**

(54) **Verfahren zur Kompensation von Bewegungsfehlern von flugkörpergetragenen SAR-Systemen**

Platform motion compensation method of airborn SAR

Procédé de compensation des erreurs de mouvement de SAR aéroporté

(84) Benannte Vertragsstaaten:
**AT BE BG CH CY CZ DE DK EE ES FI FR GB GR HU IE IT LI LU MC NL PT SE SI SK TR**

(30) Priorität: **06.03.2002  DE 10209874**

(43) Veröffentlichungstag der Anmeldung:
**10.09.2003  Patentblatt 2003/37**

(73) Patentinhaber: **EADS Deutschland GmbH**
**85521 Ottobrunn (DE)**

(72) Erfinder: **Hippler, Jörg, Dr.**
**88046 Friedrichshafen (DE)**

(74) Vertreter: **Meel, Thomas**
**Patentassessor**
**c/o EADS Deutschland GmbH**
**Patentabteilung FCL6**
**88039 Friedrichshafen (DE)**

(56) Entgegenhaltungen:
**DE-A- 19 610 502        US-A- 5 627 543**

**Beschreibung**

Die Erfindung betrifft ein Verfahren zur Bewegungskompensation bei SAR - Synthetic Aperture Radar - Systemen gemäß dem Oberbegriff des Patentanspruchs 1.

Die Verwendung abbildender Radarsysteme, insbesondere SAR-Systeme, auf Flugkörpern z.B. Flugzeugen bringt die Problematik der instabilen Flugeigenschaften z.B. aufgrund von Turbulenzen mit sich. Ideale Flugbedingungen, welche Grundlage für die SAR-Datenauswertung sind, können nicht vorausgesetzt werden. Um die Radardaten auswerten zu können, müssen z.B. eine variable Flughöhe, seitliche Abweichungen vom idealen Flugweg berücksichtigt werden. Die Folge dieser als Bewegungsfehler bezeichneten Abweichungen vom idealen Flugweg sind eine veränderte Phasenhistorie, Laufzeitschwankungen sowie eine Amplitudenmodulation des Rückstreusignals. Hieraus resultieren nachteilig geometrische Verzerrungen, eine Verringerung der räumlichen Auflösung in Azimutrichtung und eine Verminderung des Bildkontrasts.

Es werden somit Verfahren zur Kompensation dieser Bewegungsfehler gefordert. In Klausing H.; Holpp W. "Radar mit realer und synthetischer Apertur"; Oldenbourg Verlag; München 2000, wird ein dreistufiges Verfahren zur Kompensation der Bewegungsfehler (engl. : motion compensation) beschrieben. In einer ersten Stufe wird die Laufzeitverschiebung vom realen Flugweg hin zum idealen (gewünschten) Flugweg kompensiert. Diese Laufzeit entsteht auf dem Weg der Projektion zwischen dem realen Flugweg hin zum idealen Flugweg entlang der Hauptblickrichtung der Antenne. Diese Art von Bewegungsfehler wird auch als Range-Walk Fehler bezeichnet. Entsprechend wird diese Kompensationsstufe wird auch als Range-Walk Correction bezeichnet.

In einer zweiten Stufe wird der durch die Range-Walk Correction verursachte Phasenfehler kompensiert. In einer dritten Stufe erfolgt die Kompensation der Abtastfehler in Azimutrichtung. Dabei wird entlang des idealen Flugwegs eine räumlich äquidistante Abtastung in Azimutrichtung hergestellt. Die aufgrund der Projektion fehlende Werte werden dabei durch Interpolation berechnet. Es wird somit entlang des idealen Flugwegs ein Pulsfrequenz (PRF)-Raster erzeugt. Es wird hier auch von einer PRF-Rasterkorrektur gesprochen.

Ein Nachteil des bekannten Verfahrens zur Bewegungskompensation ist, dass es nur bei geringen Abweichungen, auch als Ablage bezeichnet, des realen Flugweges vom idealen Flugweg zuverlässig arbeitet. Die obere Schranke $r_0$ für eine noch zulässige Ablage wird mit höherer Auflösung $\rho$ kleiner und berechnet sich mit der Wellenlänge $\lambda$ der SAR-Trägerfrequenz gemäß

$$r_0 < \frac{\rho^2}{\lambda}. \qquad\qquad\qquad (1)$$

Bei einer hohen geforderten Auflösung $\rho$ treten bei Abweichungen größer als $r_0$ Beugungseffekte auf, die bei der Berechnung der Bewegungskompensation mit herkömmlichen Verfahren zu erheblichen Berechnungsfehlern führen.

Weitere Verfahren zum Extrahieren und Korrigieren von Bewegungsfehlern von SAR-Systeme sind aus DE 196 10 502 A1 und US 5,627,543 bekannt.

Aufgabe der Erfindung ist es, ein Verfahren zur Bewegungskompensation für SAR-Systeme anzugeben, welches Beugungseffekte berücksichtigt und mit dem auch bei großer Ablage eine hohe Auflösung möglich ist.

Diese Aufgabe wird durch das Verfahren gemäß den Merkmalen des Patentanspruchs 1 gelöst. Vorteilhafte Ausführungen des erfindungsgemäßen Verfahrens sind Gegenstand von Unteransprüchen.

Erfindungsgemäß erfolgt die Kompensation der Bewegungsfehler durch Berechnung einer Superposition von Elementarwellen an einem oder jedem Punkt auf einem idealen Flugweg. Die Ausgangspunkte der Elementarwellen liegen dabei erfindungsgemäß auf einem Abschnitt des realen Flugwegs, der gerade demjenigen Abschnitt entspricht, den eine mit einem Öffnungswinkel $\Delta\varphi$ ausgestattete und an einem Punkt des idealen Flugwegs befindliche Antenne unter der Antennenhauptblickrichtung $\varphi_0$ sieht.

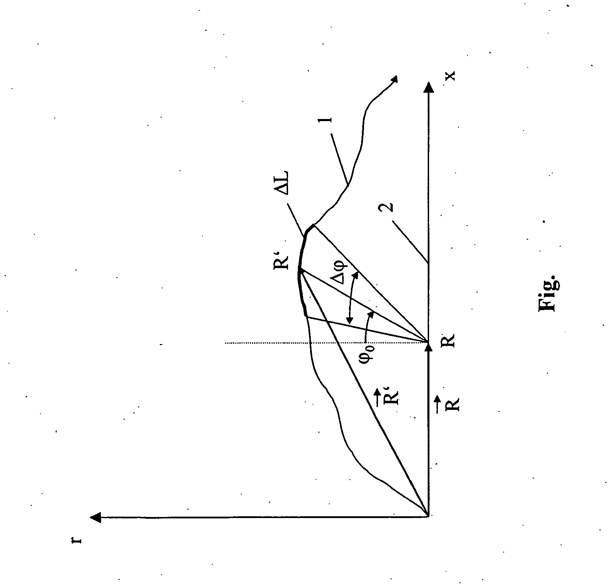

Das erfindungsgemäße Verfahren wird im weiteren anhand der einzigen Figur, die die geometrischen Verhältnisse des idealen und realen Flugwegs darstellt, näher erläutert.

Die Figur zeigt eine zweidimensionale Ebene, die durch den idealen Flugweg 2 entlang der x-Achse und durch die Antennenblickrichtung (slant range) entlang der r-Achse aufgespannt wird. Außerhalb dieser x-r-Ebene befindet sich der reale Flugweg 1 des nicht dargestellten Flugkörpers. Gemäß dem erfindungsgemäßen Verfahren wird der reale Flugweg 1 in die x-r-Ebene projiziert. Das von der Antenne beleuchtete und nicht dargestellte Gebiet befindet sich innerhalb der positiven Halbebene r > 0.

Zur Generierung eines Meßwertes am Punkt R auf dem idealen Flugweg 2 werden diejenigen Meßwerte der Punkte R' auf dem realen Flugweg 1 verwendet, die auf einem Abschnitt $\Delta L$ liegen. Als Meßwert am Punkt R' wird dabei allgemein das an dem jeweiligen Punkt R' auf dem realen Flugweg 1 gemessene Radarsignal verstanden. Entsprechend wird als Meßwert am Punkt R das am Punkt R des idealen Flugwegs 2 berechnete Radarsignal verstanden.

Der Abschnitt ∆L auf dem realen Flugweg 1 ergibt sich, indem erfindungsgemäß von einem Punkt R auf dem idealen Flugweg 2 aus der Antennenblickwinkelbereich der SAR-Prozessierung auf den realen Flugweg 1 projiziert wird. Der Punkt R ist dabei derjenige Punkt auf dem idealen Flugweg 2 an dem der Meßwert berechnet werden soll. Der Antennenblickwinkelbereich ergibt sich dabei aus der Antennenhauptblickrichtung φ0 und dem Antennenöffnungswinkel ∆φ zu $\varphi_0 \pm \Delta\varphi/2$. Die Punkte R, an denen jeweils ein Meßwert berechnet wird, sind entlang des idealen Flugwegs 2 vorteilhaft in einem äquidistanten Abstand zueinander angeordnet. Der Vorteil hierbei ist, dass somit ohne Berechnungsaufwand, sondern lediglich durch geeignete Wahl der Rasterung der Punkte R die PRF-Rasterkorrekur durchgeführt werden kann.

Die einzelnen Punkte R' im Abschnitt ∆L auf dem realen Flugweg 1 werden vorteilhaft als Huygensche Quellen aufgefaßt, von denen Elementarwellen ausgehen. Diese Elementarwellen sind bekanntermaßen Kugelwellen. Am Punkt R auf dem idealen Flugweg 2 kommt es so zu einer Überlagerung (Superposition) von mehreren Elementarwellen, deren Quellen die Punkte R' im Abschnitt ∆L auf dem realen Flugweg 1 sind. Die Berechnung des Meßwertes U(R) an dem Punkt R auf dem idealen Flugweg 2 berechnet sich somit erfindungsgemäß nach

$$U(R) = \frac{1}{\gamma\left(\sqrt{\frac{A}{\lambda}}\Delta\varphi\right)}\sqrt{2\frac{A}{\lambda}}\frac{\Delta\varphi}{N_{\Delta L}}\sum_{N_{\Delta L}}\left(U(R')\exp\left(-j\frac{4\pi}{\lambda}\left|\vec{R}-\vec{R}'\right|sign(r)\right)\right). \qquad (2)$$

Dabei ist

U(R') :     der Meßwert am Punkt R' des realen Flugwegs 1,
λ          : die Wellenlänge der SAR-Trägerfrequenz,
∆L         : der Abschnitt auf dem realen Flugweg 1,
∆φ         : der Öffnungswinkel der Antenne,
$N_{\Delta L}$     : die Zahl der Meßpunkte im Abschnitt ∆L,
A          : die mittlere Entfernung zwischen ∆L und dem Punkt R,
γ          : eine Normierungsfunktion.

Die Vektoren $\vec{R}$ und $\vec{R}'$ stellen die Entfernungen der Punkte R und R' von dem Koordinatenursprung der x-r-Ebene dar. Die Funktion sign(r) ist die Signum-Funktion, die der Unterscheidung zwischen der sogenannten Forward- und Backward Propagation dient. Das heißt, dass je nachdem ob sich der reale oder ideale Flugweg näher an dem beleuchteten Gebiet befindet, der Wert der Signum-Funktion -1 oder +1 beträgt.

Die Normierungsfunktion γ ist vorteilhaft das $\sqrt{2}$ -fache des konjugiert komplexen Fresnel-Integrals gemäß

$$\gamma(x) = \sqrt{2}\int_0^x \exp\left(-j\pi\frac{t^2}{2}\right)dt. \qquad (3)$$

Die Auflösung ρ der SAR-Prozessierung ist abhängig von dem Öffnungswinkel ∆φ, der gewählten Gewichtung des Ortsspektrums in x-Richtung (Azimutspektrum) und der Antennenhauptblickrichtung $\varphi_0$. Ohne Gewichtung des Ortsspektrums, was einem Rechteckfenster entspricht, ergibt sich die Auflösung zu

$$\rho = \frac{\lambda}{2\cdot\Delta\varphi\cdot\cos(\varphi_0)}. \qquad (4)$$

Mit dem erfindungsgemäßen Verfahren ist es möglich, die Ablage des realen Flugwegs zum idealen Flugweg in einen Nah- und einen Fernbereich aufzuteilen. Falls die Entfernungen im Nahbereich liegen, d.h. die Ablage ist kleiner als in Gln. (1) angegebene Schranke $r_0$, dann kann die Bewegungskompensation nach den herkömmlichen Verfahren berechnet werden. Ist die Ablage hingegen größer als die in Gln. (1) angegebene Schranke $r_0$, dann wird die Bewe-gungskompensation nach dem erfindungsgemäßen Verfahren durchgeführt.

Mit der in Gln. (2) angegebenen Berechnungsvorschrift ist es möglich, dass zwischen dem Nah- und dem Fernbereich ohne Unstetigkeit in der Berechnung gewechselt werden kann. Dies wird insbesondere durch den Vorfaktor der Summe in Gln. (2) erreicht.

Mit dem erfindungsgemäßen Verfahren zur Bewegungskompensation wird gleichzeitig sowohl eine Range-Walk- als auch eine Phasenkorrektur durchgeführt. Ein weiterer Vorteil ist, dass allein durch eine geeignete Wahl der Punkte R, die auf dem idealen Flugweg einen äquidistanten Abstand zueinander aufweisen, die PRF-Rasterkorrektur durchgeführt werden kann, ohne dass wie bei bekannten Verfahren dafür ein separater und zeitaufwendiger Berechnungsschritt vorgesehen werden muß.

Ein weiterer Vorteil des erfindungsgemäßen Verfahrens ist die Berücksichtigung von Beugungseffekten. Außerdem werden gegenüber den herkömmlichen Verfahren die Phasenfehler deutlich reduziert. Hieraus ergeben sich weitere Vorteile des erfindungsgemäßen Verfahrens insbesondere bei SAR-Prozessierungen bei denen eine hohe Auflösung gefordert ist.

Außerdem ist es mit dem erfindungsgemäßen Bewegungskompensationsverfahren vorteilhaft möglich, Berechnungsalgorithmen zur SAR-Bildfokussierung zu verwenden, die auf der Fast Fourier Transformation (FFT) beruhen. Gerade für die auf der FFT basierenden Algorithmen bei der SAR-Fokussierung ist das Vorliegen von Radardaten auf einer vorgegebenen Flugbahn, z.B. einer Kreisbahn oder einer geraden Linie, in einem äquidistanten Raster eine Grundvoraussetzung.

**Patentansprüche**

1. Verfahren zur Kompensation von Bewegungsfehlern von flugkörpergetragenen SAR-Systemen, wobei Meßpunkte R' mit ihren zugehörigen Meßwerten U(R') auf dem realen Flugweg (1) des Flugkörpers auf den idealen Flugweg (2) projiziert werden, **dadurch gekennzeichnet, dass** die Kompensation der Bewegungsfehler durch Berechnung einer Superposition von Elementarwellen an einem oder jedem Punkt R auf dem idealen Flugweg (2) erfolgt, wobei die Ausgangspunkte der Elementarwellen auf einem Abschnitt $\Delta L$ des realen Flugwegs (1) liegen, der gerade dem Abschnitt entspricht, den eine mit einem Öffnungswinkel $\Delta\varphi$ ausgestattete und am Punkt R des idealen Flugwegs (2) befindliche Antenne unter der Antennenhauptblickrichtung $\varphi_0$ sieht, wobei der Messwert U(R) an einem Punkt R des idealen Flugwegs (2) folgendermaßen berechnet wird:

$$U(R) = \frac{1}{\gamma\left(\sqrt{\frac{R}{\lambda}}\,\Delta\varphi\right)} \sqrt{2\frac{R}{\lambda}}\,\frac{\Delta\varphi}{N_{\Delta L}} \sum_{N_{\Delta L}}\left(U(R')\exp\left(-j\frac{4\pi}{\lambda}\left|\vec{R}-\vec{R}'\right|sign(r)\right)\right)$$

mit

U(R') : Meßwert am Punkt R' des realen Flugwegs
$\lambda$ : Wellenlänge der SAR-Trägerfrequenz
$\Delta L$ : Abschnitt auf dem realen Flugweg
$\Delta\varphi$ : Öffnungswinkel der Antenne
$N_{\Delta L}$ : Zahl der Meßpunkte im Abschnitt $\Delta L$
R : mittlere Entfernung zwischen $\Delta L$ und dem Punkt R
$\gamma$ : Normierungsfunktion.

2. Verfahren nach Anspruch 1, **dadurch gekennzeichnet, dass** die Normierungsfunktion $\gamma$ das $\sqrt{2}$ -fache des konjugiert komplexen Fresnel-Integrals ist gemäß

$$\gamma(x) = \sqrt{2}\int_0^x \exp\left(-j\pi\frac{t^2}{2}\right)dt\,.$$

**3.** Verfahren nach einem der vorangehenden Ansprüche, **dadurch gekennzeichnet, dass** die Punkte R auf dem idealen Flugweg (2) einen äquidistanten Abstand zueinander besitzen.

**4.** Verfahren nach einem der vorangehenden Ansprüche, **dadurch gekennzeichnet, dass** die Elementarwellen Huygensche Wellen sind.

**5.** Anwendung eines Verfahrens gemäß einem der vorangehenden Ansprüche bei der SAR-Bildfokussierung unter Verwendung von auf der FFT basierender Berechnungsalgorithmen.

**Claims**

**1.** Method for compensation for movement errors of missile-borne SAR systems, in which measurement points R' are projected with their associated measured values U(R') on the real flight path (1) of the missile onto the ideal flight path (2) **characterized in that** the movement errors are compensated for by calculation of a superposition of elementary waves at one or each point R on the ideal flight path (2) with the points of origin of the elementary waves lying on a section $\Delta L$ of the real flight path (1) which just corresponds to that section which an antenna which is equipped with a beam angle of $\Delta \varphi$ and is located at the point R on the ideal flight path (2) would see at the antenna main viewing direction $\varphi_0$, with the measured value U(R) at a point R on the ideal flight path (2) being calculated as follows:

$$U(R) \;=\; \frac{1}{\gamma\left(\sqrt{\frac{R}{\lambda}}\Delta\varphi\right)} \sqrt{2\,\frac{R}{\lambda}\,\frac{\Delta_\varphi}{N_{\Delta L}}} \sum_{N_{\Delta L}} \left( U(R')\exp\left(-\,j\,\frac{4\pi}{\lambda}\,\left|\overline{R}-\overline{R}\right|sign(r)\right)\right)$$

where

  U(R'): Measured value at the point R' on the real flight path
  $\lambda$: Wavelength of the SAR carrier frequency
  $\Delta L$: Section on the real flight path
  $\Delta\varphi$: Beam angle of the antenna
  $N_{\Delta L}$: Number of measurement points in the section $\Delta L$
  R: Mean distance between $\Delta L$ and the point R
  $\gamma$: Normalization function.

**2.** Method according to Claim 1, **characterized in that** the normalization function $\gamma$ is $\sqrt{2}$ -times the complex-conjugate Fresnel integral based on:

$$\gamma(x) \;=\; \sqrt{2}\int_0^x \exp\left(-\,j\pi\,\frac{t^2}{2}\right)dt\;.$$

**3.** Method according to one of the preceding claims, **characterized in that** the points R on the ideal flight path (2) are at equal distances from one another.

**4.** Method according to one of the preceding claims, **characterized in that** the elementary waves are Huygen waves.

**5.** Use of a method according to one of the preceding claims, for SAR image focusing using calculation algorithms based on FFT.

**Revendications**

1. Procédé pour compenser les erreurs de déplacement de systèmes SAR transportés sur des missiles, des points de mesure R' avec leurs valeurs mesurées U(R') associées sur la trajectoire de vol réelle (1) du missile étant projetés sur la trajectoire de vol idéale (2), **caractérisé en ce que** la compensation de l'erreur de déplacement s'effectue en calculant une superposition d'ondes élémentaires en un ou à chaque point R sur la trajectoire de vol idéale (2), les points de sortie des ondes élémentaires se trouvant sur une portion $\Delta L$ de la trajectoire de vol réelle (1), laquelle correspond justement à la portion vue dans la direction de visée principale d'antenne $\varphi_0$ par une antenne dotée d'un angle d'ouverture $\Delta\varphi$ et se trouvant au point R de la trajectoire de vol idéale (2), la valeur mesurée U(R) à un point R de la trajectoire de vol idéale (2) étant calculée de la manière suivante :

$$U(R) = \frac{1}{\gamma\left(\sqrt{\frac{R}{\lambda}}\Delta\varphi\right)}\sqrt{2\frac{R}{\lambda}}\frac{\Delta\varphi}{N_{\Delta L}}\sum_{N_{\Delta L}}\left(U(R')\exp\left(-j\frac{4\pi}{\lambda}\left|\bar{R}-\bar{R}'\right|sign(r)\right)\right)$$

où
U(R') = valeur mesurée au point R' de la trajectoire de vol réelle
$\lambda$ = longueur d'onde de la fréquence porteuse SAR
$\Delta L$ = portion de la trajectoire de vol réelle
$\Delta\varphi$ = angle d'ouverture de l'antenne
$N_{\Delta L}$ = nombre de points de mesure dans la portion $\Delta L$
R = distance moyenne entre $\Delta L$ et le point R
$\gamma$ = fonction de normalisation.

2. Procédé selon la revendication 1, **caractérisé en ce que** la fonction de normalisation $\gamma$ est égale au produit de $\sqrt{2}$ par l'intégrale de Fresnel complexe conjuguée conformément à

$$\gamma(x) = \sqrt{2}\int_{0}^{x}\exp\left(-j\pi\frac{t^2}{2}\right)dt \ .$$

3. Procédé selon l'une des revendications précédentes, **caractérisé en ce que** les points R sur la trajectoire de vol idéale (2) présentent un écart équidistant entre eux.

4. Procédé selon l'une des revendications précédentes, **caractérisé en ce que** les ondes élémentaires sont des ondes de Huygens.

5. Application d'un procédé selon l'une des revendications précédentes lors de la mise au point d'image SAR en utilisant des algorithmes de calcul basés sur la FFT.

Fig.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19610502 A1
- US 5627543 A